# EUROPEAN PATENT APPLICATION

(11) **EP 1 099 472 A2**
(43) Date of publication of application: **16.05.2001**
(21) Application number: 00309886.0
(22) Date of filing: 07.11.2000
(51) Int. Cl.: B01J 8/00, B01J 8/24

(54) **Gas fluidized bed product removal apparatus**

(30) Priority: 12.11.1999 US 165078 P
(71) Applicant: UNION CARBIDE CHEMICALS & PLASTICS TECHNOLOGY CORPORATION, Danbury, Connecticut 06817-0001 (US)
(72) Inventor: Eisinger, Ronald Steven, Charleston, West Virgina 25314 (US); Jones, David Nunn, Long Valley, New Jersey 07853 (US); Garner, Billy Jack, Charleston, West Virgina 25304 (US); Hussein, Fathi David, Cross Lanes, West Virgina 25313 (US)
(74) Representative: Hayes, Adrian Chetwynd

(57) **Abstract**

Apparatus is provided for the prevention of fouling and agglomeration within a central discharge leg employed to remove granular polymer product from a fluidized bed containing vessel.

## Description

### Field of the Invention

This invention relates to apparatus for the removal of granular polymers from fluidized bed containing vessels used for the production of such granular polymers in a gas phase fluidized bed polymerization process or for the purging of such polymers in a fluidized bed to remove undesirable volatile material. More particularly, this invention relates to an apparatus and a method for preventing fouling or agglomeration of product, especially elastomers and so-called "sticky polymers", in a central product discharge leg employed for the removal of such granular materials from a gas fluidized bed containing vessel.

### Background of the Invention

Fluidized bed reactors such as those utilized in gas phase fluidized bed polymerization reactions as well as apparatus employed for purging polymer products while in a gas fluidized condition, sometimes employ a central product discharge leg for product removal. It is usual in such apparatus to employ a gas distributor grid beneath the fluidized bed, to ensure uniform distribution of monomer gases introduced from below into the bottom of the fluidized bed. The gas distributor grid is usually concave to facilitate the movement of polymer particles to a central discharge opening. Because of the presence of the gas distributor grid at the bottom of the bed, a central discharge leg is the preferred way to remove product from the reactor without leaving product on the distributor grid. The discharge leg is simply an open pipe or conduit usually positioned in the center of the distributor grid which extends downward to a product discharge valve that is opened intermittently to remove product.

For non-sticky granular polymers such as homo-polymers and co-polymers of ethylene and propylene, the passage of these non-sticky granular particles through such a center discharge leg usually occurs uneventfully. However, when the product being produced or purged is a sticky granular polymer, fouling on the closed surface of the product discharge valve and agglomeration of the product in the discharge leg, which can lead to system shut down, becomes a serious problem. Up until now the most common approach for the avoidance of product agglomeration during sticky polymer production has been to coat or treat the polymer in some fashion, for example with finely divided inert granular material, to prevent agglomeration. See for example, United States Patents No. 4,994,534; 5,086,132 and 5,194, 626.

If the sticky polymer product is not treated in some such fashion to prevent agglomeration there is a strong possibility that the sticky product granules will agglomerate into large chunks or form a single log-like chunk.

### Summary of the Invention

We have now found that the problem of fouling and agglomeration in a center discharge leg in fluidized bed containing vessels can be largely overcome by the use of a plurality of gas jets sweeping the surface of the product discharge valve and by maintaining the granular product within the discharge leg in a fluidized condition.

### Detailed Description of the Invention

This invention relates to apparatus for use in gas phase fluidized bed reactors and in other fluidized bed containing vessels which employ a gas distribution grid to ensure uniform distribution of incoming gas in conjunction with a center discharge leg for product withdrawal. This apparatus is especially useful in connection with apparatus used for the manufacture of granular sticky polymers or for the purging of sticky polymers in a fluidized bed containing vessel.

### Nozzles and flow direction

In accordance with the invention, a plurality of nozzles positioned in the lower regions of the discharge leg, direct a continuous flow of gas, inwardly from the inner periphery of the discharge leg onto the surface of the product discharge valve positioned at the outlet of the discharge leg in such a manner as to maintain the granular product present in the discharge leg in a fluidized state. The number of nozzles needed to achieve this result is primarily dictated by the diameter of the discharge leg and by the velocity of the gases passing through the nozzles. While any number of nozzles may be directed toward the central axis of the discharge leg, at least some of the nozzles must be directed away from the central axis, so that the peripheral area on the surface of the discharge valve, when closed, is swept by the gas jets emanating from the nozzles oriented away from the central axis. At least ten percent (10%) and preferably twenty percent (20%) or more of the surface of the product discharge valve surface when closed should be swept by the gases flowing out of the nozzles.

It is also important that the nozzles be directed in such a way as to prevent any appreciable intersection of the gas jets emanating from the nozzles. Preferably there is no overlap at all. Impingement of the gas jet streams can reduce area of the valve surface, which is swept by gases, which can interfere with the desired fluidization.

The nozzles must also be angled downwardly toward the discharge valve to assure adequate sweeping of the closed discharge valve surface. When the nozzles are positioned at the very bottom of the discharge leg, close to the valve surface, the angle can be quite small. However, if for any reason the nozzles are positioned above the level of the valve surface, the angle of declination must be increased to direct the gas jets emanating from the nozzles onto the valve surface. Downward angles of as much as 30 degrees can be tolerated if necessary. However, it is preferred to minimize the downward angle by positioning the nozzles close to the level of the valve surface. It is preferred to position the nozzles not more than two inches above the closed valve surface. The preferred downward nozzle angle is between 10 and 20 degrees, with an angle of about 15 degrees being most preferred.

In the case where sticky granules are being produced or purged, as the case may be, it is usually sufficient to use four nozzles when the diameter of the discharge leg is 6 inches or less. Four to six nozzles normally suffice for discharge legs ranging from 8 to 12 inches in diameter. For diameters ranging from 14 to 18 inches, eight nozzles are recommended. For still larger diameters, the ideal number and orientation of nozzles can best be determined empirically. This determination can easily be done in a cold flow simulator, having the flexibility to alter the orientation and number of nozzles as well as the gas flow rate. It will be appreciated that the velocity of the gases emerging from the nozzles will have an influence on the number and orientation of the nozzles required to obtain the benefits of the invention. The specific recommendations provided above will apply to nearly all practical situations.

### Gas supply

The gases employed in accordance with this invention can be supplied by an independent source of pressurized gas or preferably, when the invention is practiced in connection with a gas phase polymerization process, by a slip stream taken off of the recycle gas stream. When the invention is practiced in connection with a purging process in which the product being purged is maintained in a fluidized condition, the gases fed to the nozzles can be a slip stream taken off of the main gas stream used for purging. Supplemental pumping can be employed to increase the pressure of the slip stream if necessary.

The total gas flow rate through the nozzles should be sufficient to achieve vigorous fluidization of the granular particles inside the discharge leg. In general the total gas flow rate should be equal preferably, to about three to twelve times the minimum fluidization velocity of the gases passing into the fluidized bed. It is advisable to maintain the superficial gas velocity of gases passing upward from the discharge leg at a level above a rate that would produce significant amount of particle size segregation in the fluidized bed.

It is convenient to supply gases to the nozzles by providing one or more manifolds that are fed with gases from one or more of the sources described above. When multiple manifolds are employed it is possible to introduce gases into the discharge leg at different velocities, which provides a convenient way to vary the length of the gas jets emanating from the nozzle arrays. The length of the longest gas jets entering the discharge leg should not extend into the discharge leg for a distance greater than about fifty percent of the diameter of the discharge leg and preferably no more than forty percent of the diameter. If multiple manifolds are provided, it becomes possible to inject gases at varying rates, which allows the use of long jets to sweep the inner cross-sectional region in combination with shorter jets, oriented away from the central axis, to ensure sweeping the peripheral region. It is preferred to employ two or more manifolds for this reason as this arrangement permits greater flexibility in the orientation of the gas jets emanating from the nozzles. The use of multiple manifolds also provides a means for assuring adequate sweeping of the valve surface without the risk of intersecting gas streams causing undesirable turbulence within the discharge leg.

### Product discharge

Product is normally discharged intermittently from the polymerization reactor or purge vessel as the case may be, by the simple expedient of opening the discharge valve. When the discharge valve is open product will flow down through the discharge leg past the discharge valve and into a receiving vessel. It is not necessary to stop the flow of gas through the nozzles when removing product and indeed it is preferred always to maintain at least some gas flowing through the nozzles even when the discharge valve is open to prevent them from becoming plugged. It is advisable to maintain a gas flow rate through the nozzles when the valve is open which is equal to at least 10% of the gas flow rate employed when the discharge valve is closed.

### The drawings

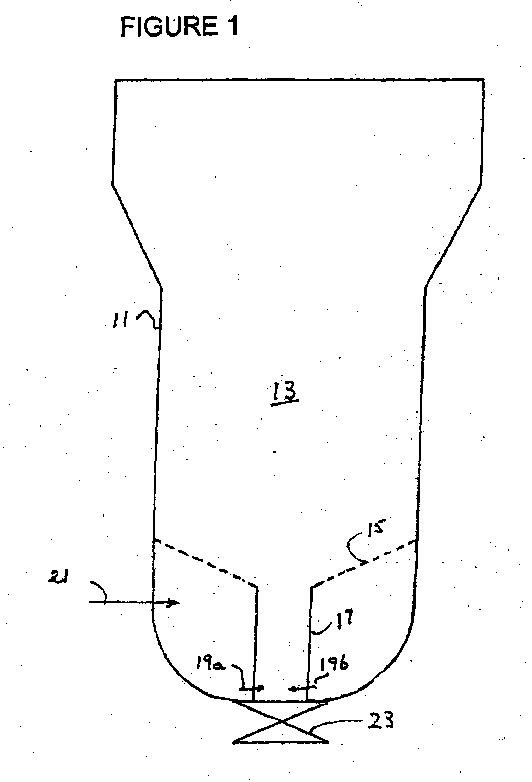

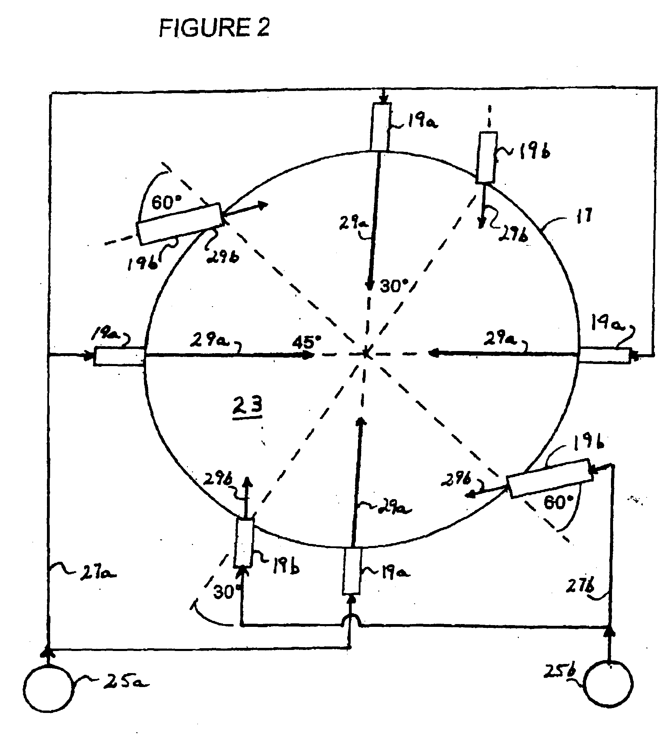

The invention is illustrated in a non-limiting fashion by means of the schematic representations presented in FIGS. 1 and 2.

FIG. 1 is a schematic representation of the lower part of a fluidized bed apparatus, which may be a polymerization reactor or a purge vessel. A center discharge leg is provided for product withdrawal and gas inlet nozzles are provided to maintain product within the discharge leg in a fluidized condition.

FIG. 2 is a schematic cross-sectional plan view of the lower part of a fluidized bed vessel illustrating the placement and orientation of nozzles in a typical installation, according to the invention.

FIGS. 1 and 2 illustrate in diagrammatic form:
(11) The lower portion of a fluidized bed containing vessel, which may be a polymerization reactor for the production of granular polymer, or a purge vessel for removing volatile material from granular polymer.
(13) A fluidized bed comprised of granular polymer.
(15) A gas distributor grid to provide for uniform distribution of entering fluidizing gases.
(17) A product discharge leg, used to remove granular polymer from the fluidized bed.
(19a and b) Nozzles. Nozzles 19a are directed at the central axis of the discharge leg and slightly downward toward the closed surface of product discharge valve 23. Nozzles 19b are directed away from the central axis of the discharge leg and also slightly downward.
(21) Fluidizing gases entering for distribution into the gas fluidized bed through the distributor grid 15.
(23) A product discharge valve for the removal of product from the fluidized bed via product discharge leg 17.
(25a and 25b) Separate gas supply sources for nozzles 19a and 19b.
(27a and 27b) Manifolds for the delivery of gases from gas supply sources 25a and 25b to nozzles 19a and 19b.
(29a and 29b) Gas jets emanating from nozzles 19a and 19b.

The apparatus represented in FIGS. 1 and 2 is employed in the following manner to prevent fouling of the closed discharge valve surface and the walls of the discharge leg and also to prevent agglomeration of granular polymer present within the product discharge leg.

Gases are transferred from gas sources 25a and 25b via manifolds 27a and 27b to nozzles 19a and 19b respectively. Preferably the gases entering nozzles 19b are at a lower flow rate than those entering nozzles 19a which causes the gas jets emanating from the nozzles 19b to project a shorter distance into the interior of the discharge leg than those emanating from the radially directed nozzles 19a. As a result, none of the gas jets intersect with other gas jets. The sweeping of the surface of the closed discharge valve prevents polymer from sticking to the valve surface and maintains all of the polymer within the discharge leg in a fluidized condition thereby preventing fouling of the walls of the discharge leg as well as product agglomeration within the discharge leg.

### Example 1

Eight nozzles were installed around the periphery of a product discharge leg having a diameter of 15 and ¼ inches. Each nozzle was located 1 and ¼ inches above the surface of a product discharge valve positioned at the bottom of the discharge leg. The nozzles were inclined downward at an angle of 15° from the horizontal plane. Four of the nozzles were normal (radial) to the ring and were spaced 90° apart along the circumference. Two additional nozzles were mounted at a 30° angle from normal. These nozzles were mounted opposite each other (180° apart) and were located 30° apart circumferentially from two of the normal nozzles. The orifices of these six nozzles were approximately ¾ of one inch in diameter. The final two nozzles had 1 inch nozzle orifices and were mounted at a 60° angle from normal. They were mounted opposite each other (180° apart) and located 45° away, circumferentially, from the normal nozzles. This preferred arrangement is illustrated in Figure 2.

In the preferred arrangement, gas flow was independently controlled to the manifold feeding the four normal nozzles and separately to the manifold feeding the other four nozzles. Total gas flow rate was fixed to provide the desired superficial gas velocity of about 2.0 ft/sec through the discharge leg. A 60/40 split of gas flow rates, in which the higher gas flow went to the four normal nozzles, was found to be about optimal. This experiment was conducted with granules of ethylene-propylene rubber particles at temperatures varying between 60° and 90°C. No agglomeration of the particles or plugging of the discharge valve of the discharge leg was observed.

### Example 2

An apparatus similar to what was used in Example 1 was tested with non-sticky granular polyethylene. In this experiment, the product discharge leg had a diameter of 14 and ¼ inches and the last two nozzles were at 90° from normal instead of having a 60° angle to normal and they also had an orifice diameter of ¾ inch rather than 1 inch. At a superficial gas velocity of 2.0 ft./sec and a ratio of gas flow rates of 60:40 (nozzles aligned toward the central axis to nozzles aligned away from the central axis), the gas jet length from each normal nozzle just reached the central axis of the discharge leg. Fluidization of the discharge leg was vigorous with slugging. Most of the gas jets reached the surface of the closed discharge valve. About 70 to 90 % of the polymer particles on the closed valve surface remained stationary, but this stationary layer appeared to be very thin. Thus, compaction forces, which could lead to particle agglomeration, were virtually nil.

## Claims

1. Discharge apparatus for the removal of granular polymer product from a vessel containing a gas fluidized bed of granular polymer product, which comprises:
a) an open generally cylindrical product removal leg positioned beneath said fluidized bed of granular product,
b) a product discharge valve at the bottom of said product removal leg, and
c) a plurality of individual nozzle means each oriented toward the surface of said valve means and in communication with a source of gas under pressure;
whereby some or all of the surface of said product discharge valve is continuously swept free of granular polymer when said valve is in a closed position.

2. Discharge apparatus for the removal of granular polymer product from a vessel containing a gas fluidized bed of granular polymer product, which comprises:
a) an open generally cylindrical product discharge leg positioned beneath said bed of fluidized granular polymer product and at the center of a gas distribution grid for fluidizing gases entering said vessel;
b) a product discharge valve at the bottom of said leg;
c) a plurality of individual nozzle means oriented toward the surface of said product discharge valve when closed; and
d) one or more independent sources of gas under pressure in communication with said nozzles.

3. Apparatus according to claim 1 or 2 wherein at least some of said nozzles are directed from the periphery of said leg in a direction away from the central axis of said leg.

4. Apparatus according to claim 3 wherein some of said nozzles are directed from the periphery of said leg toward the central axis of said leg and at least some of said nozzles are directed from the periphery of said leg in a direction away from the central axis of said leg.

5. Apparatus according to claim 4 wherein the flow rate of gases entering the leg from nozzles directed toward the central axis of said leg is higher than the flow rate of gases entering nozzles oriented away from the central axis of said leg.

6. Apparatus according to claim 4 or 5 wherein at least some of said nozzles are directed downward onto the surface of said discharge valve when closed.

7. Apparatus according to claim 6 wherein the downward orientation of said nozzles is from 10 to 20 degrees below horizontal.

8. Apparatus according to any one of claims 4 to 7 wherein the gas jets emanating from said nozzles do not extend beyond the central axis of said discharge leg.

9. Apparatus according to any one of the preceding claims comprising a concave gas distributor grid.

10. Apparatus according to any one of the preceding claims wherein the gas jets emanating from said nozzles do not intersect.

11. A method for the prevention of fouling and agglomeration of granular polymeric material within a discharge leg positioned beneath a gas fluidized bed of such granular material and over a product discharge valve for the removal of such material, which comprises sweeping the closed surface of said discharge valve with a plurality of gas jets at least some of which are directed toward the central axis of said discharge leg and at least some other nozzles are directed away from the central axis of said discharge leg.
